# EUROPÄISCHE PATENTSCHRIFT

(11) **EP 1 382 623 B1**
(45) Veröffentlichungstag und Bekanntmachung des Hinweises auf die Patenterteilung: **07.06.2006**
(21) Anmeldenummer: 03014563.5
(22) Anmeldetag: 07.07.2003
(51) Int. Cl.: C08G 18/08, C09D 167/00, C09D 175/04

(54) **Wässrige Bindemittel**
Aqueous binders
Liants aqueux

(30) Priorität: 19.07.2002 AT 11002002
(43) Veröffentlichungstag der Anmeldung: 21.01.2004
(73) Patentinhaber: Cytec Surface Specialties Austria GmbH, 8402 Werndorf (AT)
(72) Erfinder: Feola, Roland, Dr., 8045 Graz (AT); Kuttler, Ulrike, Dr., 8302 Vasoldsberg (AT); Gmoser, Johann, 8045 Graz (AT)
(74) Vertreter: Deckers, Hellmuth Alexander

(56) Entgegenhaltungen:
- EP-A- 0 548 873
- EP-A- 1 199 342
- DE-C1- 19 930 555
- US-A- 5 494 956

## Beschreibung

Die Erfindung betrifft wäßrige Bindemittel. Weiter betrifft sie deren Verwendung zur Formulierung von Einbrennlacken, welche auch bei vergleichsweise niedrigen Einbrenntemperaturen steinschlagfeste Füller für die Automobillackierung ergeben.

In der Patentliteratür werden bereits Bindemittel für Automobilfüllerlacke beschrieben, die sich durch hohe Steinschlagfestigkeit auszeichnen:

So beschreibt die DE-A 41 42 816 ein wäßriges Überzugsmittel, enthaltend ein Reaktionsprodukt aus einem Säuregruppen enthaltenden Urethanharz und einem Hydroxylgruppen-haltigen Polyesterharz, in Mischung mit einem nicht wasserverdünnbaren blockierten Polyisocyanat und einem Aminharz als weiteren Vernetzer.

In der AT-B 408 657 wird ein Kondensationsprodukt beschrieben aus einem Carboxylgruppen aufweisenden Harz und einem Hydroxylgruppen aufweisenden Harz in Kombination mit einem Härter, bestehend aus einer Mischung aus einem wasserunlöslichen blockierten Isocyanat und einem hydrophil modifizierten Isocyanat.

In der AT-B 408 658 wird eine Kombination des oben erwähnten Kondensationsproduktes mit einem Härter beschrieben, der ein wasserunlösliches unblockiertes Isocyanat sowie ein hydrophiles, teilveräthertes Aminoplastharz enthält.

In der AT-B 408 659 wird der Zusatz eines Hydroxylgruppen-reichen, wasserunlöslichen, niedermolekularen Polyesters zu den oben genannten Kondensationsprodukten beschrieben.

In der DE 199 30 555 C1 wird eine wäßrige Beschichtungszusammensetzung beschrieben, die als Füller einsetzbar ist, und die anspruchsgemäß eine in Wasser dispergierbare urethangruppenhaltige hydroxyfunktionelle Bindemittelkomponente (A), eine in Wasser dispergierbare urethangruppenhaltige Bindemittelkomponente (B) mit blockierten Isocyanatgruppen, ein in Wasser dispergierbares Aminoplastharz (C), gegebenenfalls einen in Wasser dispergierbaren hydroxyfunktionellen Polyester (D) und gegebenenfalls übliche Lackadditive (E) enthält.

In der EP-A 1199 342 schließlich werden besondere, wasserverdünnbare Hydroxyurethane als Zumischharze beschrieben, wobei auf diese Weise sowohl der Festkörper-Massenanteil der Bindemittel -Lieferform, als auch der im Lack deutlich erhöht werden. Überraschenderweise wurde dabei gefunden, daß derartige Zumischharze auch die Steinschlagfestigkeit verbessern.

Alle oben genannten Systeme sind allerdings weiter verbesserungswürdig. So werden die immer weiter steigenden Anforderungen der Automobilindustrie mit den genannten Systemen nicht immer erfüllt. Als neue Anforderung ist insbesondere das Absenken der Einbrenntemperatur von derzeit etwa 160 bis 170 °C auf ca. 140 °C hinzugekommen, mit einer Unterbrennsicherheit bis zu ca. 130 °C, bei gleichbleibender hoher Qualität der gehärteten Lacke.

Es wurde nun gefunden, daß durch Zusatz von Hydroxyurethanen **C**, welche durch Umsetzung von flexiblen, "weichen" mehrfunktionellen Hydroxy-Verbindungen **Ca** mit starren, "harten" mehrfunktionellen Isocyanaten **Cb** hergestellt werden können, zu Kondensationsprodukten **AB** von Hydroxylgruppen-haltigen Harzen **B** und Säuregruppen-haltigen Harzen **A** und Kombinationen dieser Mischungen mit Hartem **D**, die schon bei entsprechend niedrigen Einbrenntemperaturen (130 bis 140 °C) wirksam sind, Bindemittel zugänglich werden, die beim Einbrennen bereits im Temperaturbereich von 130 bis 140 °C zu solchen Beschichtungen führen, die neben guten Allround-Eigenschaften ausgezeichnete Steinschlagfestigkeit aufweisen.

Die Erfindung betrifft daher wäßrige Bindemittel enthaltend Kondensationsprodukte **AB** von Säuregruppen-haltigen Harzen **A** und Hydroxylgruppen-haltigen Harzen **B,** Hydroxyurethane **C** und Härter **D**, die bereits bei Temperaturen ab 120 °C wirksam werden, dadurch gekennzeichnet, daß die Kondensations produkte **AB** in einem Massenanteil bezogen auf die Summe der Massen der Komponenten **AB** und **C**, von 60% bis 95% enthalten sind, und daß die Hydroxyurethane **C** Bausteine aufweisen abgeleitet von mehrfunktionellen Hydroxyverbindungen **Ca** mit mindestens 4 Kohlenstoffatomen, wobei ein Teil der Kohlenstoffatome durch Sauerstoffatome (in Form von Ätherbindungen) oder durch Estergruppen ersetzt sein kann, und mindestens zwei Hydroxylgruppen, die bevorzugt endständig sind, bezogen auf die längste Kette des Moleküls ausgewählt aus 1,4 Butandiol, 1,6-Hexanediol, und deren höheren Homologen, Diäthylenglykol und Triäthylenglykol und höheren Oligomeren, Dipropylenglykol und Tripropylen glykol und deren höheren Oligomeren, sowie Polycaprolactondiolen und Bausteine abgeleitet von mehrfunktionellen Isocyanaten Cb ausgewählt aus Isocyanaten der Formel R(NCO)ₙ, wobei R ein n-funktioneller cycloaliphatischer, aliphatisch-polycyclischer, aromatisch-aliphatisch-verzweigter oder aromatischer Rest ist, wobei im letzteren Fall die Isocyanatgruppen an verschiedene Kerne gebunden sind, und n mindestens 2 ist.

Unter flexibel bzw. "weich" werden dabei solche Hydroxy-Verbindungen **Ca** verstanden, die eine aliphatische Kette mit mindestens 4, bevorzugt mindestens 5, und insbesondere mindestens 6 Kohlenstoffatomen enthalten, wobei gegebenenfalls ein Teil der Kohlenstoffatome durch Sauerstoffatome oder Estergruppen ersetzt sein kann, und wobei gegebenenfalls vorhandene Verzweigungen nicht mitgerechnet werden. Bevorzugt werden Dihydroxyverbindungen. Erfindugsgemäß werden 1,4-Butandiol, 1,6-Hexandiol und höhere Homologe, Diäthylenglykol, Triäthylenglykol und höherer Oligomere, Dipropylenglykol, Tripropylenglykol und höhere Oligomere, sog. Polycaprolactondiole wie sie beispielsweise von der Fa. Interorgana in der "®Placcel L-Serie" angeboten werden, ausgewählt. Es können auch Mischungen dieser Hydroxyverbindungen verwendet werden.

Unter starr bzw. "hart" werden solche mehrfunktionellen Isocyanate **Cb** der Formel R(NCO)ₙ verstanden, bei denen der Rest R entweder cycloaliphatisch, aliphatisch-polycyclisch, aromatisch-aliphatisch-verzweigt oder aromatisch aufgebaut ist, wobei im letzeren Fall die Isocyanatgruppen an verschiedene aromatische Kerne gebunden sind. Bevorzugt werden Diisocyanate (n=2). In diese Gruppe fallen beispielsweise Isophorondiisocyanat, Norbornandiisocyanat, Dicyclohexylmethandiisocyanat, Tetramethylxylylendiisocyanat, Diphenylmethandiisocyanat, 4,4'-Diisocyanatodiphenyl sowie 1,5- Naphthalindiisocyanat. Es können auch Mischungen dieser Isocyanate verwendet werden.

Die Hydroxyurethane **C** sind bevorzugt streng linear aufgebaut - das ist der Fall bei ausschließlicher Verwendung von Diolen als Komponente **Ca** und Diisocyanaten als Komponente **Cb.** Um einen gewissen Verzweigungsgrad zu erreichen, was gegebenenfalls vorteilhaft sein kann, können anteilsweise (jeweils bis zu 10 % der Stoffmenge der difunktionellen Edukte) auch Polyole, bevorzugt Triole **Ca'** als Bestandteil der Komponente **Ca** und/oder Isocyanate **Cb'** mit mehr als 2 Isocyanatgruppen pro Molekül als Bestandteil der Komponente Cb mitverwendet werden. Diese höherfunktionellen Stoffe müssen dann nicht mehr der zuvor genannten "hart/weich"-Definition genügen. Aus der Vielzahl geeigneter Polyole **Ca'** seien beispielsweise Trimethylolpropan, Trimethyloläthan, Ditrimethylolpropan, Erythrit, Pentaerythrit, Sorbit und Polycaprolactontriole (®Placcel 300-Serie, Fa. Interorgana) genannt. Als Isocyanate Cb' mit einer Funktionalität von mehr als 2 eignen sich z.B. trimerisiertes Hexamethylendiisocyanat (®Desmodur N 3300, Fa. Bayer, ca. 3 NCO-Gruppen pro Molekül) und oligomeres Diphenylmethandiisocyanat mit ca. 2,3 NCO-Gruppen pro Molekül (®Desmodur VL, Fa. Bayer).

Die Gegenwart von Hydroxylgruppen in dem Hydroxyurethan **C** wird dadurch sichergestellt, daß die Stoffmenge der Hydroxylgruppen der Komponente **Ca** stets größer als die der Isocyanatgruppen der Komponente **Cb** in der Eduktmischung ist.

Bei der Synthese der Hydroxyurethane **C** geht man bevorzugt so vor, daß man die Hydroxyverbindung **Ca** bzw. ein Gemisch von Hydroxyverbindungen **Ca** vorlegt und das mehrfunktionelle Isocyanat **Cb** bzw. ein Gemisch von mehrfunktionellen Isocyanaten **Cb** bei 50 bis 130 °C unter Rühren so zulaufen läßt, daß die Exothermie gut beherrschbar bleibt. Nach Ende der Zugabe hält man die Reaktionsmasse noch so lange bei erhöhter Temperatur, bis keine oder nahezu keine Isocyanatgruppen mehr nachweisbar sind.

Die so hergestellten Hydroxyurethane **C** können entweder in lösungsmittelfreier Form als Schmelze oder angelöst in einem geeigneten Lösungsmittel als Zumischharze weiterverarbeitet werden. Da diese Zumischharze, wenn überhaupt, nur beschränkt wasserlöslich sind, müssen sie für die Herstellung von wasserverdünnbaren Bindemitteln vom wasserlöslichen Kondensat aus Hydroxylgruppen- und Carboxylgruppen-haltigen Harzen (siehe die Dokumente AT-B 408 657 und AT-B 408 658) "mitgetragen", also von diesen in Wasser emulgiert werden.

Durch geeignete Wahl der stöchiometrischen Verhältnisse der Edukte **Ca** und **Cb** sowie ihrer Funktionalität, soweit auch mehr als difunktionelle Edukte eingesetzt werden, kann der Polymerisationsgrad des Hydroxyurethans beeinflußt werden. Bevorzugt strebt man einen Bereich an, bei dem sich ein Staudinger-Index (früher als "Grenzviskositätszahl" bezeichnet) von mindestens 4 bis maximal 25 cm³/g ergibt. Die Wahl des im gegebenen Fall günstigsten Polymerisationsgrades hängt einerseits von der Verträglichkeit mit dem jeweils verwendeten Kondensat und damit von der Stabilität der Bindemitteldispersion ab, andererseits natürlich auch von den erzielten lacktechnischen Eigenschaften (Applizierbarkeit, Oberflächenqualität etc.). Der jeweils günstigste Polymerisationsgrad des Hydroxyurethans muß von Fall zu Fall evaluiert werden. Bevorzugt weisen die Hydroxyurethane **C** einen Staudinger-Index von 4 bis 19 cm³/g auf, gemessen in Dimethylformamid als Lösungsmittel bei 23 °C.

Die fertig hergestellten, wasserlöslichen Bindemittel enthalten neben den genannten Hydroxyurethanen **C** die oben genannten Kondensate **AB**, die in der AT-B 408 657 ausführlich beschrieben sind. Diese Kondensationsprodukte **AB** aus einem Säuregruppen aufweisenden Harz **A** und einem Hydroxylgruppen aufweisenden Harz **B**, wobei das Harz **A** bevorzugt eine Säurezahl von 100 bis 230 mg/g, insbesondere von 120 bis 160 mg/g, und das Harz **B** bevorzugt eine Hydroxylzahl von 50 bis 500 mg/g, insbesondere von 60 bis 350 mg/g, aufweist, haben bevorzugt eine Säurezahl von 25 bis 75 mg/g, insbesondere 30 bis 50 mg/g. Ihr Staudinger-Index ("Grenzviskositätszahl", gemessen in Dimethylformamid als Lösungsmittel bei 23 °C) beträgt üblicherweise 10 bis 20 cm³/g, insbesondere 12 bis 19 cm³/g, und besonders bevorzugt 13 bis 18 cm³/g.

Der Anteil der Masse der Hydroxyurethane **C** an der Summe der Massen der Kondensationsprodukte **AB** und des Hydroxyurethans **C** beträgt zwischen 5 und 40 % (5 bis 40 cg/g, wobei jeweils die Massen der Feststoffanteile angegeben werden). Bevorzugt ist der Massenanteil von **C** 10 bis 35 cg/g, insbesondere 15 bis 30 cg/g.

Zur Herstellung des Kondensationsprodukts **AB** werden die Komponenten **A** und **B** bevorzugt in einem Massenverhältnis von 10 zu 90 bis 80 zu 20, insbesondere von 15 zu 85 bis 40 zu 60, eingesetzt. Die Kondensationsprodukte **AB** werden aus den Polyhydroxy-Komponenten **B** und den Polyacyl-Komponenten **A** unter Kondensationsbedingungen hergestellt, d. h. bei einer Temperatur von 80 bis 180 °C, bevorzugt zwischen 90 und 170 °C, vorzugsweise in Gegenwart von solchen Lösungsmitteln, die mit dem bei der Kondensation gebildeten Wasser Azeotrope bilden. Die Kondensation wird soweit geführt, bis die Kondensationsprodukte **AB** die oben genannten Säurezahlen aufweisen. Nach zumindest teilweiser Neutralisation der verbliebenen Carboxylgruppen (wobei vorzugsweise 10 bis 80 % der Carboxylgruppen, besonders bevorzugt 25 bis 70 % neutralisiert werden) sind die Kondensationsprodukte **AB** in Wasser dispergierbar. Während der Kondensation kann man beobachten, daß die anfänglich trübe Reaktionsmasse sich klärt und eine homogene Phase bildet.

Die Harze **A** mit Säuregruppen werden bevorzugt ausgewählt aus Polyesterharzen **A1,** Polyurethanharzen **A2,** den sogenannten Maleinatölen **A3,** mit ungesättigten Carbonsäuren gepfropften Fettsäuren und Fettsäuregemischen **A4,** den Acrylatharzen **A5** sowie den mit Phosphorsäure oder Phosphonsäuren modifizierten Epoxidharzen **A6**. Bevorzugt ist die Säurezahl der Harze **A** 100 bis 230 mg/g, insbesondere von 70 bis 160 mg/g. Ihr Staudinger-Index, gemessen in Dimethylformamid als Lösungsmittel bei 23 °C, beträgt im allgemeinen ca. 6,5 bis 12 cm³/g, bevorzugt 8 bis 11 cm³/g.

Geeignete Polyesterharze **A1** lassen sich in bekannter Weise herstellen aus Polyolen **A11** und Polycarbonsäuren **A12,** wobei ein Teil, bevorzugt bis zu 25 %, der Stoffmenge der Polyole und Polycarbonsäuren auch durch Hydroxycarbonsäuren **A13** ersetzt sein kann. Durch geeignete Wahl von Art und Menge der Edukte **A11** und **A12** wird sichergestellt, daß der resultierende Polyester eine ausreichende Zahl von Säuregruppen, entsprechend der oben angegebenen Säurezahl, hat. Die Polyole **A11** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2- und 1,3-Propandiol, 1,4-Butandiol, 1,6-Hexandiol, Neopentylglykol, Di- und Triäthylenglykol, Di- und Tripropylenglykol, Glycerin, Trimethylolpropan und Trimethyloläthan. Geeignete Polycarbonsäuren **A12** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure und Trimesinsäure, Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A2** lassen sich darstellen durch Umsetzung von aliphatischen Polyolen **A21** wie unter **A11** definiert, Hydroxyalkancarbonsäuren **A22** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A25** mit im Mittel mindestens zwei Hydroxylgruppen pro Molekül, die ausgewählt werden können aus Polyätherpolyolen **A251,** Polyesterpolyolen **A252,** Polycarbonatpolyolen **A253,** gesättigten und ungesättigten Dihydroxyaliphaten **A254,** die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A23,** bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyanat, Bis(4-isocyanatocyclohexyomethan, Hexamethylendiisocyanat und 1,6-Düsocyanato-3,3,5- und -3,5,5-trimethylhexan.

Besonders bevorzugt werden solche Polyurethanharze **A2**, die hergestellt werden können durch Umsetzung einer Mischung von einem oder mehreren Polyolen **A21** mit einer Hydroxyalkancarbonsäure **A22** und mindestens einem mehrfunktionellen Isocyanat **A23,** das mit Monohydroxyverbindungen **A24** ausgewählt aus Polyalkylenglykol-Monoalkyläthern HO-(R¹-O)ₙ₋R², wobei R¹ ein linearer oder verzweigter Alkylenrest mit 2 bis 6, bevorzugt 2 bis 4 Kohlenstoffatomen ist, und R² eine Alkylgruppe mit 1 bis 8, bevorzugt 2 bis 6 Kohlenstoffatomen ist, und n eine ganze Zahl von 1 bis 40 ist, und Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist. Der Blockierungsgrad wird hier angegeben als Anteil der blockierten Isocyanatgruppen, bezogen auf die in dem Isocyanat **A23** insgesamt vorhandenen (blockierten und unblockierten) Isocyanatgruppen. Es ist weiter bevorzugt, die Polyurethanharze **A2** derart herzustellen, daß eine Mischung eines mehrfunktionellen Isocyanats und eines auf die oben beschriebene Weise blockierten mehrfunktionellen Isocyanats mit der Hydroxyalkancarbonsäure **A22** und den Polyolen **A21** und **A25** umgesetzt werden, wobei die Mischungsverhältnisse so gewählt werden, daß in jedem Molekül des Polyurethanharzes **A2** im Mittel eine oder mehr als eine endständige blockierte Isocyanatgruppe vorliegt.

Als "Maleinatöl" **A3** werden Umsetzungsprodukte von (trocknenden) Ölen **A31** und olefinisch ungesättigten Carbonsäuren **A32,** besonders Dicarbonsäuren bezeichnet. Als Öle **A31** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca.180. Die ungesättigten Carbonsäuren **A32** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Öl verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl- und Methacrylsäure, sowie Citracon-, Mesacon- und Itaconsäure.

Ebenfalls geeignete Harze **A4** sind mit den unter **A32** genannten ungesättigten Säuren gepfropfte Fettsäuren oder Fettsäuregemische **A41,** wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze A5 sind die durch Copolymerisation von olefinisch ungesättigten Carbonsäuren **A51** und anderen Vinyl- oder Acryl-Monomeren **A52** zugänglichen sauren Acrylatharze. Die Carbonsäuren sind die bereits unter **A32** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A52** sind die Alkylester von Acryl- und Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A51** und **A52** genannten Monomeren in Gegenwart von solchen Verbindungen **A53**, die mit den ungesättigten Carbonsäuren unter Addition und Bildung einer Carboxyl- oder Hydroxyl-funktionellen copolymerisierbaren Verbindung reagieren. Derartige Verbindungen sind beispielsweise Lactone **A531,** die mit den Carbonsäuren **A51** unter Ringöffnung zu einer Carboxyl-funktionellen ungesättigten Verbindung reagieren, und Epoxide **A532,** insbesondere Glycidylester von in α-Stellung verzweigten gesättigten aliphatischen Säuren mit 5 bis 12 Kohlenstoffatomen wie der Neodecansäure oder der Neopentansäure, die unter Addition mit der Säure **A51** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A53** vor und führt die Polymerisation so durch, daß diese Verbindung als (alleiniges) Lösungsmittel verwendet wird, so erhält man lösungsmittelfreie Acrylatharze.

Die mit Phosphorsäure oder Phosphonsäuren modifizierten Epoxidharze oder Addukte von Epoxidharzen und Fettsäuren **A6** werden hergestellt durch Umsetzung vorzugsweise in einem Lösungsmittel von Phosphorsäure oder organischen Phosphonsäuren, die mindestens zweibasig sind, mit Epoxidharzen oder Addukten von Epoxidharzen und Fettsäuren. Dabei wird die Stoffmenge der eingesetzten Phosphor- oder Phosphonsäure üblicherweise so bemessen, daß sämtliche Epoxidgruppen durch die Umsetzung mit der Säure verbraucht werden, und daß eine ausreichende Anzahl von Säuregruppen auch nach der Reaktion noch zur Verfügung steht. Das entstandene Harz weist Hydroxylgruppen (aus der Reaktion der Oxirangruppe mit der Säurefunktion) auf, wobei diese Hydroxylgruppen in β-Stellung zur Estergruppierung stehen, gegebenenfalls Hydroxylgruppen in den ätherartig gebundenen Resten des Glycidylalkohols aus dem Epoxidharz, sowie Säuregruppen der Phosphor- bzw. Phosphonsäure, die nicht durch die Umsetzung mit dem Epoxid verbraucht wurden.

Als Hydroxylgruppen-haltige Harze **B** sind insbesondere Polyester **B1,** Acrylatharze **B2,** Polyurethanharze **B3** sowie Epoxidharze **B4** geeignet. Die Hydroxylzahl der Harze **B** beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 23 °C in Dimethylformamid als Lösungsmittel, beträgt bevorzugt 8 bis 13 cm³/g, insbesondere 9,5 bis 12 cm³/g.

Die Polyester **B1** werden wie die Komponente **A1** durch Polykondensation hergestellt; lediglich ist hier Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, eine entsprechenden Überschuß an Hydroxylkomponenten (Polyolen) **B11** gegenüber den Säuren **B12** einzusetzen. Die Polyole **B11** und die mehrfunktionellen Säuren **B12,** die in der Polykondensationsreaktion zu den Hydroxylgruppen-haltigen Polyestern **B1** umgesetzt werden, werden aus den gleichen Gruppen wie die Polyole **A11** und die Säuren **A12** ausgewählt. Es ist hier ebenso möglich, einen Teil der Polyole und Säuren durch Hydroxysäuren entsprechend **A13** zu ersetzen. Es wird dabei angestrebt, daß die Säurezahl der Komponente **B** nicht über 20 mg/g, bevorzugt unter 18 mg/g, liegt. Die Säurezahl läßt sich beispielsweise dadurch herabsetzen, daß der fertig kondensierte Polyester **B1** mit einer geringen Menge einwertiger aliphatischer Alkohole **A14** unter Veresterungsbedingungen nachreagiert wird. Dabei ist die Menge an Alkoholen **A14** so zu bemessen, daß zwar die Säurezahl unter den Grenzwert abgesenkt wird, jedoch der Staudinger-Index nicht unter die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **B2** sind zugänglich durch üblicherweise radikalisch initiierte Copolymerisation von Hydroxylgruppen-haltigen Acrylmonomeren **B21** mit anderen Vinyl- oder Acrylmonomeren **B22** ohne solche Funktionalität. Beispiele für die Monomeren **B21** sind Ester der Acryl- und Methacrylsäure mit aliphatischen Polyolen, insbesondere Diolen mit 2 bis 10 Kohlenstoffatomen, wie Hydroxyäthyl- und Hydroxypropyl-(meth)acrylat. Beispiele für die Monomeren **B22** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung (s. oben, **A53)** vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in α-Stellung verzweigten aliphatischen Monocarbonsäuren, insbesondere der als Neopentansäure oder Neodecansäure kommerziell erhältlichen Säuren bzw. Säuregemische, weiter Lactone wie ε-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **B3** sind in bekannter Weise zugänglich durch Addition von oligomeren oder polymeren Polyolen **B31,** ausgewählt aus Polyesterpolyolen, Polyätherpolyolen, Polycarbonatpolyolen und Polyolefinpolyolen, gegebenenfalls niedermolekularen aliphatischen Diolen oder Polyolen **B33** mit 2 bis 12 Kohlenstoffatomen, wie beispielsweise Äthylenglykol, 1,2- und 1,3-Propylenglykol, 1,4-Butandiol, 1,6-Hexandiol, Di- und Tri- Äthylen- bzw. Propylenglykol, Neopentylglykol, Trimethylolpropan, Pentaerythrit, und mehrfunktionellen Isocyanaten **B32**, wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse Mₙ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm³/g, vorzugsweise mindestens 9,5 cm³/g aufgebaut.

Epoxidharze **B4**, die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül eine Epoxidgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestem von zweibasigen organischen Säuren mit den genannten Diolen herstellen. Alle bekannten Epoxidharze lassen sich hier einsetzen, soweit sie der Bedingung für die Hydroxylzahl genügen.

Die Bindemittelmischungen aus dem Kondensat **AB** und dem Zumischharz **C** werden zur Vernetzung vorzugsweise mit wasserverdünnbaren Aminoplastharzen **D1**, insbesondere Melaminharzen kombiniert. Es können gegebenenfalls aber auch geeignete blockierte Polyisocyanate **D2** als Härterkomponente mitverwendet werden, wobei deren Anteil an der Masse der insgesamt eingesetzten Härter (jeweils Anteil des Feststoffs) vorzugsweise bis zu 30 %, besonders bevorzugt bis zu 15 % betragen kann. Durch die Zumischung der Hydroxyurethane **C** wird die Steinschlagfestigkeit der so modifizierten wasserlöslichen Bindemittel erheblich verbessert, wobei die damit hergestellten Beschichtungen bereits bei Temperaturen von 130 bis 140 °C gehärtet werden können. Ebenso wird überraschenderweise der Glanz deutlich verbessert.

Das Aminoplastharz **D1** wird bevorzugt in teil- oder vollverätherter Form eingesetzt. Insbesondere geeignet sind Melaminharze wie Hexamethoxymethylmelamin, mit Butanol oder mit Mischungen aus Butanol und Methanol verätherte Typen, sowie die entsprechenden Benzoguanamin-, Caprinoguanamin- oder Acetoguanaminharze. Bevorzugt werden Melaminharze, die teilweise oder vollständig veräthert sein können, wobei Methanol als Verätherungsalkohol bevorzugt ist.

Geeignete blockierte Isocyanate **D2** sind zugänglich durch Umsetzung von mehrfunktionellen aromatischen, aliphatischen oder gemischt aromatisch-aliphatischen Isocyanaten mit als Blockierungsmittel bezeichneten gegenüber Isocyanat reaktiven und monofunktionellen Verbindungen, wobei diese Reaktionsprodukte bei erhöhter Temperatur, d. i. oberhalb von 120 °C, bevorzugt bereits oberhalb von 100 °C, und in bestimmten Fällen bereits ab 80 °C wieder in ihre Edukte, Isocyanat und Blockierungsmittel, gespalten werden. Beim Härtungsvorgang wird das Blockierungsmittel frei und kann aus dem noch unvollständig gehärteten Lackfilm entweichen. Bevorzugt werden blockierte Isocyanate, die in bekannter Weise zugänglich sind aus Diisocyanaten wie Toluylendiisocyanat, Isophorondiisocyanat, Bis(4-isocyanatophenyl)methan, 1,6-Diisocyanatohexan, Tetramethylxylylendiisocyanat sowie den aus diesen gebildeten Allophanaten, Biureten oder Uretdionen, und üblichen Blockierungsmitteln. Dies sind beispielsweise lineare oder verzweigte aliphatische Alkohole mit 3 bis 20 Kohlenstoffatomen, bevorzugt 2-Äthylhexanol; Phenole wie Phenol selbst; Glykol-Monoester, wobei die Glykole monomere oder oligomere Alkylenglykole wie Glykol selbst, 1,2- und 1,3-Propandiol, 1,4-Butandiol, Di- und Triäthylenglykol, Di- und Tripropylenglykol sein können, und die Säure ausgewählt ist aus aliphatischen Monocarbonsäuren mit 1 bis 10 Kohlenstoffatomen, bevorzugt Essigsäure; Glykolmonoäther, wobei die Glykole den oben genannten entsprechen und die Verätherungskomponente ausgewählt ist aus den aliphatischen niederen Alkoholen mit 1 bis 8 Kohlenstoffatomen, bevorzugt Butylglykol; oder Ketoxime von aliphatischen Ketonen mit 3 bis 10 Kohlenstoffatomen, wie beispielsweise Butanonoxim. Besonders bevorzugt ist der Einsatz von 3,5-Dimethylpyrazol als Blockierungsmittel, da es nicht toxisch ist und auch bei Temperaturen von 180 °C und darüber nicht vergilbt. Die Blockierungsmittel werden in üblicher Weise so gewählt, daß die Abspaltungstemperatur zwischen 80 und 180 °C liegt. Besonders bevorzugt werden blockierte Isocyanate auf Basis von Isophorondiisocyanat und 1,6-Diisocyanatohexan.

Es ist auch möglich, hydrophile blockierte Isocyanate einzusetzen. In dieser Hinsicht wird auf die diesbezügliche Offenbarung der österreichischen Patentschrift AT-B 408 657 verwiesen, deren Offenbarungsgehalt durch diese Bezugnahme in die vorliegende Anmeldung eingefügt wird.

Die Erfindung betrifft weiter wäßrige Lacke, die die Kondensationsprodukte **AB**, die Hyroxyurethane **C** und Härter **D** sowie Pigmente und Füllstoffe sowie gegebenenfalls weitere Additive wie Netzmittel, Antiabsetzmittel, Fließverbesserer, Verdicker und Verlaufmittel enthalten.

Mit den erfindungsgemäßen wäßrigen Bindemitteln können wäßrige Lacke formuliert werden, die zu Beschichtungen mit hohem Glanz und guter Widerstandsfähigkeit gegen Steinschlag führen. Solche Lacke werden insbesondere für Automobilfüller eingesetzt. Die Herstellung der Lacke erfolgt bevorzugt durch Vermischen der Komponenten **AB** und **C**, Teilen dieser Mischung, wobei der erste Teil mit Pigmenten und Füllstoffen sowie Additiven zu einer Paste innig vermischt wird, die anschließend durch Zugabe des Restes der Mischung von **AB** und **C**, des Härters **D** und gegebenenfalls von weiteren Additiven und Wasser zum fertigen Lack formuliert wird.

Durch die nachfolgenden Beispiele wird die Erfindung weiter erläutert.

### Beispiele

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung). In den Beispielen wurden folgende Abkürzungen verwendet (M: molare Masse):

| | | |
|---|---|---|
| EP 380 | Diepoxidharz mit einem spezifischen Epoxidgruppengehalt von ca. 5,26 mol/kg ("Epoxidäquivalentgewicht" EEW ca. 190 g/mol) | |
| DGM | Diäthylenglykoldimethyläther | |
| MIBK | Methylisobutylketon | |
| TDI | Toluylendiisocyanat | M = 174 g/mol |
| HD | 1,6-Hexandiol | M = 118 g/mol |
| BD | 1,4 Butandiol | M = 90 g/mol |
| CD | Polycaprolactondiol* | M = 550 g/mol |
| DEG | Diäthylenglykol | M = 106 g/mol |
| TPG | Tripropylenglykol | M = 192 g/mol |
| DPG | Dipropylenglykol | M = 134 g/mol |
| TMP | Trimethylolpropan | M = 134 g/mol |
| IPDI | Isophorondiisocyanat | M = 222 g/mol |
| DCHDI | Dicyclohexylmethandiisocyanat | M = 262 g/mol |
| TMXDI | Tetramethylxylylendiisocyanat | M = 244 g/mol |
| THDI | Trimerisiertes Hexamethylendiisocyanat +, | M = 575 g/mol |

| | | |
|---|---|---|
| * ®Placcel 205, Fa. Interorgana | | |
| + Desmodur N 3300, Bayer | | |

### Herstellung der Zumischkomponente C :

- C1:: In einen Dreihalskolben, ausgestattet mit Rührer und Rückflußkühler, wurden 236 g 2,0 mol) 1,6-Hexandiol und 90 g (1,0 mol) 1,4-Butandiol gefüllt, die Mischung wurde auf 80 °C erwärmt. Anschließend wurden unter Rühren innerhalb von zwei Stunden 444 g (2,0 mol) Isophorondiisocyanat zugegeben. Unter zeitweiligem Kühlen ließ man dabei die Temperatur bis auf 90 °C ansteigen. Nach Ende der Zugabe wurde die Reaktionsmischung noch so lange bei 90 °C gehalten, bis kein freies Isocyanat mehr nachzuweisen war (ca. 2 h). Zuletzt wurde mit Methoxypropanol verdünnt auf einen Festkörper-Massenanteil von ca. 80 % ("n.f.A.", nichtflüchtige Anteile). Man erhielt ein Produkt mit einem Staudinger-Index ("Grenzviskositätszahl", gemessen in Dimethylformamid bei 23 °C) von 5,5 cm³/g.

Analog zu der oben beschriebenen Durchführung wurden weitere Dihydroxyurethane hergestellt (siehe Tabelle 1).

**Tabelle 1 Herstellung von Dihydroxyurethanen**

| **Zumisch-harz** | **Dihydroxyverbindung Art \| *n***_{**H**} **in mol \|*m***_{**H**} **in g** | **Diisocyanat Art \| *n***_{**I**} **in mol \|*m***_{**I**} **in g** | **Staudinger- Index** *J*₀ in cm³/g | **Ausbeute Festharz *m***_{**F**} **in g** | **Hydroxylzahl in mg/g** |
|---|---|---|---|---|---|
| C 1 | HD \| 2,0 \| 236 | IPDI \| 2,0 \| 444 | 5,5 | 770 | 145 |
| | BD \| 1,0 \| 90 | | | | |
| C 2 | BD \| 2,0 \| 180 | DCHDI | 8,9 | 1306 | 69 |
| | CD \| 1,0 \| 550 | \| 2,2 \| 576 | | | |
| C 3 | DEG \| 2,0 \| 212 | DCHDI \| 1,5 \| 393 | 4,8 | 880 | 127 |
| | CD \| 0,5 \| 275 | | | | |
| C 4 | HD \| 2,2 \| 260 | IPDI \| 2,0 \| 444 | 6,7 | 858 | 130 |
| | TPG \|0,8\| 154 | | | | |
| C 5 | BD \|2,0\| 180 | TMXDI \|2,1\| 512 | 6,8 | 1242 | 81 |
| | CD \|1,0\| 550 | | | | |
| C6 | BD \|3,3\| 297 | IPDI \|3,0\| 666 | 7,8 | 1348 | 83 |
| | CD \|0,7\| 385 | | | | |
| C 7 | HD \|2,0\| 236 | IPDI \|1,0\| 222 | 6,4 | 836 | 134 |
| | DPG \|1,0\| 134 | TMXDI \|1,0\| 244 | | | |
| C 8 | TMP \|2,0\| 268 | IPDI \|2,0\| 444 | 7 | 1032 | 108 |
| | CD \|0,5\| 275 | | | | |
| | BD \|0,5\| 45 | | | | |
| C 9 | HD \| 2,0 \| 236 | IPDI \| 2,0 \| 444 | 8 | 827 | 122 |
| | BD \| 1,0 \| 90 | THDI \| 0,1 \| 57 | | | |

| | | | | | |
|---|---|---|---|---|---|
| *n*_{H} ; *m*_{H} : Stoffmenge bzw. Masse der Hydroxyverbindung Ca | | | | | |
| *n*_{I} ; *m*_{I} : Stoffmenge bzw. Masse der Isocyanatverbindung Cb | | | | | |
| *m*_{F} : Masse des Festharzes des Hydroxyurethans C | | | | | |

### Polyester PE (Vergleichsbeispiel)

In einen 3-Halskolben ausgestattet mit Rührer und Rückflußkühler wurden 150 g (1,0 mol) Triäthylenglykol gefüllt und unter Inertgas auf 120 °C erwärmt. Dann wurden 148 g (1,0 mol) Phthalsäureanhydrid zugefügt und die Temperatur unter Ausnutzung der auftretenden Exothermie auf 150 °C erhöht. Nach Erreichen einer Säurezahl von 180 mg/g wurden 134 g (1,0 mol) Trimethylolpropan zugegeben, der Ansatz langsam auf 220 °C erhitzt, mit Xylol ein Destillationskreislauf eingestellt und unter Abtrennung des anfallenden Reaktionswassers so lange verestert, bis eine Säurezahl von unter 5 mg/g erreicht war. Zuletzt wurde das Kreislaufmittel durch Destillation unter vermindertem Druck abgezogen.

### Herstellung der Polycarboxylkomponenten A

### Carboxylgruppen-haltiges Polyurethan (A 1)

In einem geeigneten Reaktionsgefäß wurde eine Lösung von 810 g (6 mol) Dimethylolpropionsäure in 946 g DGM und 526 g MIBK vorgelegt. Innerhalb von 4 Stunden wurde zu dieser Lösung bei 100 °C eine Mischung aus 870 g (5 mol) TDI und 528 g (2 mol) eines mit Äthylenglykolmonoäthyläther halbblockierten TDI gleichzeitig zugegeben. Sobald alle NCO-Gruppen umgesetzt waren, wurde der Ansatz mit einer Mischung aus DGM und MIBK (Massenverhältnis 2:1) auf einen Festkörper-Massenanteil von 60 % verdünnt. Die Komponente (A1) wies eine Säurezahl von 140 mg/g und einen Staudinger-Index ("Grenzviskositätszahl"), gemessen in N,N-Dimethylformamid (DMF) bei 23 °C, von 9,3 cm³/g auf.

Das halbblockierte TDI wurde durch Zugabe von 90 g (1 mol) Äthylenglykolmonoäthyläther zu 174 g (1 mol) TDI innerhalb von 2 Stunden bei 30 °C und anschließender Reaktion bis zu einem Massenanteil an unreagierten Isocyanatgruppen in der Mischung ("NCO-Wert") von 16 bis 17 % hergestellt.

### Säuremodifiziertes Epoxidharz (A 2)

In einem geeigneten Reaktionsgefäß wurde eine Mischung von 146 g (1,0 mol) Adipinsäure, 40 g (0,3 mol) Phosphorsäure (75 %ige Lösung in Wasser) und 46 g Methoxypropanol vorgelegt. Die Mischung wurde auf 70 °C erwärmt, innerhalb einer Stunde wurden 323 g (Stoffmenge an Epoxidgruppen 1,7 mol) EP 380 unter Rühren zugegeben. Die Temperatur stieg dabei durch leichte Exothermie auf etwa 80 °C an. Nach Ende der Zugabe wurde der Ansatz auf 110 °C erhitzt und so lange bei dieser Temperatur gehalten, bis eine Säurezahl von 130 bis 140 mg/g erreicht war.

### Carboxylgruppen-haltiger Polyester (A 3)

In einen 3-Halskolben ausgestattet mit Rührer und Rückflußkühler wurden 140 g (1,3 mol) Diäthylenglykol und 152 g (1,1 mol) Trimethylolpropan eingewogen. Unter Rühren und Inertgas wurde die Mischung auf 100 °C erwärmt und bei dieser Temperatur portionsweise 109 g (0,6 mol) Isophthalsäure, 96 g (0,6 mol) Adipinsäure und zuletzt 198 g (1,3 mol) Phthalsäureanhydrid zugegeben. Unter Ausnutzung der auftretenden Exothermie wurde die Temperatur auf 130 °C erhöht.

Nachdem zwei Stunden bei 130 °C gehalten worden war, wurde langsam auf 180 °C erwärmt und unter Abtrennung des jetzt anfallenden Reaktionswassers bis zu einer Säurezahl von 50 mg/g verestert.

Nach Erreichen der angegebenen Säurezahl wurde mit Butylglykol auf einen Festkörper-Massenanteil von 60 % verdünnt und zuletzt durch Zugabe von 14 g (0,16 mol) N,N-Dimethyläthanolamin neutralisiert.

Das so erhaltene Produkt war unbegrenzt wasserverdünnbar.

### Herstellung der Polyhydroxylkomponenten B

### Polyester (B 1):

In einem geeigneten Reaktionsgefäß wurden 130 g (1,1 mol) Hexandiol-1,6, 82 g (0,6 mol) Pentaerythrit, 8 g (0,05 mol) Isononansäure, 28 g (0,1 mol) Rizinenfettsäure (dehydratisierte Rizinusölfettsäure) und 50 g (0,3 mol) Isophthalsäure bei 210 °C bis zu einer Säurezahl von weniger als 4 mg/g verestert. Die Viskosität einer 50 %igen Lösung in Äthylenglykolmonobutyläther, gemessen als Auslaufzeit nach DIN 53211 bei 20 °C, betrug 125 Sekunden, der Staudinger-Index, gemessen in N,N-Dimethylformamid bei 23 °C, betrug 9,8 cm³/g.

### Polyester (B 2):

In gleicher Weise wie beim Polyester B 1 wurden 38 g (0,2 Mol) Tripropylenglykol, 125 g (1,2 Mol) Neopentylglykol, 28 g (0,1 Mol) isomerisierte Linolsäure, 83 g (0,5 Mol) Isophthalsäure und 58 g (0,3 Mol) Trimellithsäureanhydrid bei 230 °C bis zu einer Säurezahl von weniger als 4 mg/g verestert. Die Viskosität einer 50 %igen Lösung in Äthylenglykolmonobutyläther, gemessen als Auslaufzeit nach DIN 53211 bei 20 °C betrug 165 Sekunden. Der Staudinger-Index, gemessen in N,N-Dimethylformamid bei 23 °C, betrug 10,5 cm³/g.

### Herstellung der Bindemittelkomponenten (Kondensationsprodukte AB)

Entsprechend den in der Tabelle 2 angegebenen Massenverhältnissen wurden die Polycarboxylkomponenten (A) und die Polyhydroxylkomponenten (B) miteinander gemischt und das vorhandene Lösungsmittel während des Aufheizens auf eine Reaktionstemperatur von 160 °C unter Vakuum weitgehend entfernt. Diese Temperatur wurde gehalten, bis die gewünschte Säurezahl erreicht worden war, wobei eine Probe nach Neutralisation mit Dimethyläthanolamin einwandfrei wasserverdünnbar war. 80 g des auf diese Weise erhaltenen Kondensates (Feststoff) wurden bei 90 °C mit jeweils 20 g (Feststoff) des angegebenen Dihydroxyurethans **C** gemischt, mit der entsprechenden Menge an Dimethyläthanolamin auf einen Neutralisationsgrad von 80 % (bezogen auf die jeweils vorhandenen Säuregruppen) neutralisiert und nach 30 Minuten Homogenisierungszeit portionsweise mit Wasser auf eine Viskosität von unter 3000 mPa·s bei 23 °C verdünnt.

Bei den Vergleichsbeispielen wurden statt des Dihydroxyurethans 20 g (Feststoff) eines niedermolekularen Hydroxylgruppen-haltigen Polyesters (PE) zugemischt.

Bei der Nullprobe wurde das Kondensat aus der Polycarboxylkomponente (A) und der Polyhydroxylkomponente (B) ohne weitere Modifikation wie oben angegeben neutralisiert und mit Wasser verdünnt.

**Tabelle 2**

| **Beispiel** | **Komponente A** | | **Komponente B** | | **Säurezahl des Kondensats AB mg/g** | **Zumischkom-ponente C** | | **Viskosität (23 °C)** | **Festkörper-Massenanteil** |
|---|---|---|---|---|---|---|---|---|---|
| | **AMasse in g** | **Art** | **Masse in g** | **Art** | | **Masse in g** | **Art** | **η in mPa·s** | **in %** |
| 1 | 30 | A 1 | 50 | B 1 | 45 | 20 | C 1 | 2607 | 46 |
| 2 | 30 | A 2 | 50 | B 2 | 43 | 20 | C 2 | 2433 | 39,4 |
| 3 | 30 | A 1 | 50 | B 1 | 43 | 20 | C 3 | 2130 | 41 |
| 4 | 30 | A 1 | 50 | B 1 | 42 | 20 | C 4 | 2233 | 38,8 |
| 5 | 30 | A 2 | 50 | B 2 | 42 | 20 | C 5 | 1980 | 44,2 |
| 6 | 30 | A 2 | 50 | B 2 | 44 | 20 | C 6 | 2330 | 42 |
| 7 | 30 | A 1 | 50 | B 1 | 43 | 20 | C 7 | 1844 | 41,2 |
| 8 | 30 | A 2 | 50 | B 2 | 47 | 20 | C 8 | 2720 | 38,6 |
| 9 | 30 | A 3 | | | 50 | 20 | C 9 | 1977 | 37,8 |
| 10 | 30 | A 3 | | | 50 | 20 | C 1 | 1739 | 40,9 |

| **Vergleichsbeispiele** | | | | | | | | | |
|---|---|---|---|---|---|---|---|---|---|
| 11 | 30 | A 1 | 50 | B 1 | 43 | 20 | PE | 2226 | 37 |
| 12 | 30 | A 2 | 50 | B 2 | 42 | 20 | PE | 1989 | 37,8 |
| 13 | 30 | A 3 | | | 50 | 20 | PE | 2243 | 36,2 |

### Anwendungstechnische Prüfung:

### Lacktechnische Prüfung der erfindungsgemäßen Bindemittel als Automobilfüller

Mit den in der Tabelle 3 angegebenen Rezepturen wurden in üblicher Vorgehensweise wäßrige Füllerlacke hergestellt und durch weiteren Zusatz von deionisiertem Wasser (in der Tabelle als "deionisiertes Wasser 2" bezeichnet) jeweils auf eine Viskosität von 120 mPa·s (1,2 Poise) eingestellt. Die Lacke 1 bis 5 wurden mittels eines 150 µm-Rakel auf gereinigte Glasplatten appliziert und nach 15 minütigem Flash-off 20 Minuten bei 140 °C eingebrannt. Die dabei erhaltenen Beschichtungen dienten zur Bestimmung der Pendelhärte und des Glanzes, sie wurden auch einer optischen Beurteilung unterzogen.

**Tabelle 3: Füllerbeispiele**

| | | **Lack 1** | **Lack 2** | **Lack 3** | **Lack 4** | **Lack 5** |
|---|---|---|---|---|---|---|
| Bindemittel 1 | in g | 91,8 | - | - | - | - |
| Bindemittel 3 | in g | - | 103,0 | - | - | - |
| Bindemittel 8 | in g | - | - | 109,2 | - | - |
| Bindemittel 11 (Vergleich) | in g | - | - | - | 114,0 | - |
| Bindemittel 12 (Vergleich) | in g | - | - | - | - | 111,6 |
| Netzmittel* | in g | 1,2 | 1,2 | 1,2 | 1,2 | 1,2 |
| deionisiertes Wasser 1 | in g | 15,0 | 18,0 | 25,0 | 28,0 | 25,0 |
| Titandioxid | in g | 60,0 | 60,0 | 60,0 | 60,0 | 60,0 |
| Füllstoff + | in g | 60,0 | 60,0 | 60,0 | 60,0 | 60,0 |
| Bindemittel 1 | in g | 130,0 | - | - | - | - |
| Bindemittel 3 | in g | - | 145,8 | - | - | - |
| Bindemittel 8 | in g | - | - | 155,2 | - | - |
| Bindemittel 11 (Vergleich) | in g | - | - | - | 161,6 | - |
| Bindemittel 12 (Vergleich) | in g | - | - | - | - | 158,2 |
| Aminoplastharz‡ | in g | 18,0 | 18,0 | 18,0 | 18,0 | 18,0 |
| deionisiertes Wasser 2 | in g | 6 | 9,0 | 18,0 | 20,0 | 17 |
| Masse des Lacks | in g | 382,0 | 415,0 | 446,6 | 462,8 | 451,0 |
| Aussehen des gehärteten Lackfilms | | störungsfrei | störungsfrei | störungsfrei | störungsfrei | störungsfrei |
| Trockenfilmschichtstärke in | in µm | 37 | 35 | 34 | 33 | 34 |
| Pendelhärte | | 115 | 103 | 132 | 45 | 53 |
| Glanz (gemessen im Winkel von 60°) | | 91 | 90 | 90 | 85 | 86 |

| | | | | | | |
|---|---|---|---|---|---|---|
| Pendelhärte: Pendelhärte nach König (DIN 53157), gemessen nach dem Einbrennen (20 Minuten bei 140°C) und 1 Stunde Lagerung bei Normklima | | | | | | |
| * Netzmittel ist Surfynol 104E (Air Products) | | | | | | |
| + Füllstoff ist Bariumsulfat (Blanc fixe super F, Fa. Sachtleben) | | | | | | |
| ‡®Mapzenal MF 904, Solutia Germany GmbH & Co. KG | | | | | | |

### Ergebnis:

Alle Lacke ergeben störungsfreie Filmoberflächen, der Glanz der Lacke 1, 2 und 3 (auf Basis der erfindungsgemäßen Bindemittel) ist deutlich höher als der der Vergleichslacke (Lack 4 und 5). Die Filmhärten der Beschichtungen basierend auf erfindungsgemäßen Bindemitteln (Lacke 1, 2 und 3) entsprechen den Anforderungen an wäßrige Automobilfüller, wohingegen die Filmhärten der Vergleichslacke eindeutig zu niedrig liegen.

### Prüfbleche für den Steinschlagtest:

Prüfaufbau: Bonder 26 60 OC als Substrat, 25 µm einer üblichen ETL- Grundierung, 35 µm des wäßrigen Füllers gemäß den Lacken 1 bis 5, 40 µm eines handelsüblichen Acryl- Melamin-Decklacks.

| | |
|---|---|
| Einbrennbedingungen für die ETL- Grundierung: | 30 Minuten bei 175 °C |
| Einbrennbedingung für Füller (Lacke 1 bis 5): | 20 Minuten bei 140 °C |
| Einbrennbedingung für Decklack: | 30 Minuten bei 140 °C |

Die so vorbereiteten Prüfbleche wurden nach dem Einbrennen 24 Stunden bei Normklima gelagert und anschließend einem Steinschlagtest gemäß der DIN-Norm 55996-1 unterzogen (2 Durchläufe mit jeweils 0,5 kg kantigem Beschußmaterial, Druck: 2 bar)

| | |
|---|---|
| Prüfblech 1: | ETL- Grundierung, Füller auf Basis von Lack 1, Decklack |
| Prüfblech 2: | ETL- Grundierung, Füller auf Basis von Lack 2, Decklack |
| Prüfblech 3: | ETL- Grundierung, Füller auf Basis von Lack 3, Decklack |
| Prüfblech 4 (Vergleich): | ETL- Grundierung, Füller auf Basis von Lack 4, Decklack |
| Prüfblech 5 (Vergleich): | ETL- Grundierung, Füller auf Basis von Lack 5, Decklack |

### Ergebnis:

Die in der Tabelle 4 zusammengefaßten Steinschlag- Kennwerte zeigen, daß mit den Bindemitteln gemäß der Erfindung hervorragende Ergebnisse erzielt wurden, hingegen die Vergleiche ohne Zusatz der Hydroxyurethane als Zumischharz nur mangelhafte Ergebnisse im Steinschlagtest liefern.

**Tabelle 4 Ergebnisse des Steinschlag-Tests**

| | Steinschlag-Kennwert gemäß DIN-Norm 55996-1 |
|---|---|
| Prüfblech 1 | 0 bis 1 |
| Prüfblech 2 | 1 bis 2 |
| Prüfblech 3 | 1 bis 2 |
| Prüfblech 4 | 4 bis 5 |
| Prüfblech 5 | 4 |

## Patentansprüche

1. Wäßrige Bindemittel enthaltend Kondensationsprodukte **AB** von Carboxylgruppen-haltigen Harzen A und Hydroxylgruppen-haltigen Harzen **B,** Hydroxyurethane **C** und Härter **D,** die bereits bei Temperaturen ab 120 °C wirksam werden, **dadurch gekennzeichnet, daß** die Kondensationsprodukte **AB** in einem Massenanteil, bezogen auf die Summe der Massen der Komponenten **AB** und **C,** von 60 % bis 95 % enthalten sind, und **daß** die Hydroxyurethane **C** Bausteine aufweisen abgeleitet von mehrfunktionellen Hydroxyverbindungen **Ca** mit mindestens 4 Kohlenstoffatomen, wobei ein Teil der Kohlenstoffatome durch Sauerstoffatome oder durch Estergruppen ersetzt sein kann, und mindestens zwei Hydroxylgruppen, ausgewählt aus 1,4-Butandiol, 1,6-Hexandiol, und deren höheren Homologen, Diäthylenglykol und Triäthylenglykol und höheren Oligomeren, Dipropylenglykol und Tripropylenglykol und deren höheren Oligomeren, sowie Polycaprolactondiolen, und Bausteine abgeleitet von mehrfunktionellen Isocyanaten Cb ausgewählt aus Isocyanaten der Formel R(NCO)ₙ , wobei R ein n-funktioneller cycloaliphatischer, aliphatisch-polycyclischer, aromatisch-aliphatisch-verzweigter oder aromatischer Rest ist, wobei im letzteren Fall die Isocyanatgruppen an verschiedene Kerne gebunden sind, und n mindestens 2 ist.

2. Wäßrige Bindemittel nach Anspruch 1, **dadurch gekennzeichnet, daß** die Hydroxyurethane **C** endständige Hydroxylgruppen aufweisen.

3. Wäßrige Bindemittel nach Anspruch 1, **dadurch gekennzeichnet, daß** die Hydroxyurethane C Bausteine abgeleitet von Diolen **Ca** und Diisocyanaten **Cb** enthalten.

4. Wäßrige Bindemittel nach Anspruch 1, **dadurch gekennzeichnet, daß** die Härter **D** wasserverdünnbare Aminoplastharze **D1** und gegebenenfalls blockierte Isocyanate **D2** enthalten.

5. Wäßrige Bindemittel nach Anspruch 1, **dadurch gekennzeichnet, daß** die Hydroxyurethane **C** einen Staudinger-Index von 4 bis 19 cm³/g aufweisen, gemessen in Dimethylformamid als Lösungsmittel bei 23 °C.

6. Wäßrige Bindemittel nach Anspruch 1, **dadurch gekennzeichnet, daß** die Kondensationsprodukte **AB** eine Säurezahl von 25 bis 75 mg/g und einen Staudinger-Index von 10 bis 20 cm³/g aufweisen, gemessen in Dimethylformamid als Lösungsmittel bei 23 °C, und erhältlich sind durch Kondensation von Hydroxylgruppen enthaltenden Harzen **B** mit einer Hydroxylzahl von 50 bis 500 mg/g und Carboxylgruppen enthaltenden Harzen **A** mit einer Säurezahl von 100 bis 230 mg/g.

7. Wäßrige Bindemittel nach Anspruch 1, **dadurch gekennzeichnet, daß** der Anteil der Hydroxyurethane C in der Summe der Massen von Kondensationsprodukten **AB** und Zumischharz C zwischen 5 und 40 % beträgt.

8. Wäßrige Bindemittel nach Anspruch 1, **dadurch gekennzeichnet, daß** der Anteil der Masse der Härter **D** in der Summe der Massen der Kondensationsprodukte **AB**, der Hydroxyurethane **C** und der Härter **D** von 2 bis 20 % beträgt.

9. Verwendung von wäßrigen Bindemitteln nach Anspruch 1 zur Herstellung von Automobilfüllerlacken, wobei zunächst die Kondensationsprodukte **AB** mit den Hydroxyurethanen **C** gemischt und neutralisiert werden, die Mischung anschließend in Wasser dispergiert wird, ein Teil dieser Dispersion mit Pigmenten und Füllstoffen sowie gegebenenfalls weiteren Additiven innig vermischt wird, sodann der Rest der Dispersion und der Härter **D** sowie gegebenenfalls weiteres Wasser zugefügt wird.

10. Automobilfüllerlacke, enthaltend wäßrige Bindemittel nach Anspruch 1.

## Claims

1. An aqueous binder comprising condensation products **AB** of carboxyl-containing resins **A** and hydroxyl-containing resins **B,** hydroxyurethanes **C,** and curing agents **D** which are active even at temperatures starting at 120 °C, wherein the condensation products **AB** are present in a mass fraction, based on the sum of the masses of the components **AB** and **C,** of from 60 % to 95 %, and wherein the hydroxyurethanes **C** include units derived from polyfunctional hydroxy compounds **Ca** having at least 4 carbon atoms, it being possible for some of the carbon atoms to be replaced by oxygen atoms or by ester groups, and at least two hydroxyl groups, selected from 1,4-butanediol, 1,6-hexanediol, and higher homologs thereof, diethylene glycol and triethylene glycol and higher oligomers, dipropylene glycol and tripropylene glycol and higher oligomers thereof, and also polycaprolactonediols, and units derived from polyfunctional isocyanates **Cb** selected from isocyanates of the formula R(NCO)ₙ, where R is an n-functional cycloaliphatic, aliphatic-polycyclic, aromatic-aliphatic-branched or aromatic radical, in the latter case the isocyanate groups being attached to different nuclei, and n is at least 2.

2. The aqueous binder as claimed in claim 1, wherein the hydroxyurethanes **C** contain terminal hydroxyl groups.

3. The aqueous binder as claimed in claim 1, wherein the hydroxyurethanes **C** include units derived from diols **Ca** and diisocyanates **Cb.**

4. The aqueous binder as claimed in claim 1, wherein the curing agents **D** comprise water-dilutable amino resins **D1** and blocked or nonblocked isocyanates **D2.**

5. The aqueous binder as claimed in claim 1, wherein the hydroxyurethanes **C** have a Staudinger index of from 4 to 19 cm³/g, measured in dimethylformamide solvent at 23 °C.

6. The aqueous binder as claimed in claim 1, wherein the condensation products **AB** have an acid number of from 25 to 75 mg/g, and a Staudinger index of from 10 to 20 cm³/g, measured in dimethylformamide solvent at 23 °C, and are obtainable by condensing hydroxyl-containing resins **B** having a hydroxyl number of from 50 to 500 mg/g and carboxyl-containing resins **A** having an acid number of from 100 to 230 mg/g.

7. The aqueous binder as claimed in claim 1, wherein as a proportion of the sum of the masses of condensation products **AB** and admixture resin **C** the fraction of the hydroxyurethanes **C** is between 5 and 40 %.

8. The aqueous binder as claimed in claim 1, wherein as a proportion of the sum of the masses of the condensation products **AB,** the hydroxyurethanes **C,** and the curing agents **D** the fraction of the mass of the curing agents **D** is from 2 to 20 %.

9. The use of an aqueous binder as claimed in claim 1 to prepare an automotive surfacer material, the condensation products **AB** first being mixed with the hydroxyurethanes **C** and neutralized, the mixture then being dispersed in water, a portion of this dispersion being intimately mixed with pigments and fillers and also, where appropriate, further additives, and then the remainder of the dispersion and the curing agent D and also, where appropriate, further water being added.

10. An automotive surfacer material comprising an aqueous binder as claimed in claim 1.

## Revendications

1. Liant aqueux contenant des produits de condensation AB de résines A contenant des groupements carboxyles et de résines B contenant des groupements hydroxyles, des hydroxyuréthanes C, et des durcisseurs D, qui sont rendus efficaces à des températures à partir de 120°C, **caractérisé en ce que** les produits de condensation AB sont contenus à une teneur massique de 60 à 95%, rapportée à la somme des masses des composants AB et C, et **en ce que** les hydroxyuréthanes C présentent des éléments constitutifs dérivés de composés hydroxy polyfonctionnels Ca avec au moins 4 atomes de carbone, où une partie des atomes de carbone peuvent être remplacés par des atomes d'oxygène ou par des groupements esters, et au moins deux groupements hydroxyle, choisis parmi le 1,4-butandiol, le 1,6-hexandiol et leurs homologues plus élevés, le diéthylène glycol, le triéthylène glycol et leurs oligomères plus élevés, le dipropylène glycol, le tripropylène glycol et leurs oligomères plus élevés, ainsi que les polycaprolactondiols, et des constituants dérivés d'isocyanates polyfonctionnels Cb choisis parmi les isocyanates de formule R(NCO)ₙ, où R est un reste n-fonctionnel cycloaliphatique, aliphatique polycyclique, aromatique-aliphatique ramifié ou aromatique, où dans ce dernier cas, les groupements isocyanates sont liés à différents noyaux et n est au moins égal à 2.

2. Liant aqueux selon la revendication 1 **caractérisé en ce que** les hydroxyuréthanes C présentent des groupements hydroxyles terminaux.

3. Liant aqueux selon la revendication 1 **caractérisé en ce que** les hydroxyuréthanes C contiennent des éléments constitutifs dérivés de diols Ca et de diisocyanates Cb.

4. Liant aqueux selon la revendication 1 **caractérisé en ce que** les durcisseurs D contiennent des résines aminoplastes diluables à l'eau D1, et le cas échéant des isocyanates bloqués D2.

5. Liant aqueux selon la revendication 1 **caractérisé en ce que** les hydroxyuréthanes C présentent une viscosité intrinsèque de 4 à 19 cm³/g, mesurée dans le diméthylformamide comme solvant à 23°C.

6. Liant aqueux selon la revendication 1 **caractérisé en ce que** les produits de condensation AB présentent un indice d'acidité de 25 à 75 mg/g et une viscosité intrinsèque de 10 à 20 cm³/g mesurée dans le diméthylformamide comme solvant à 23°C, et peuvent être obtenus par condensation de résines B contenant des groupements hydroxyles avec un indice d'hydroxyle de 50 à 500 mg/g et de résines A contenant des groupements carboxyles avec un indice d'acidité de 100 à 230 mg/g.

7. Liant aqueux selon la revendication 1 **caractérisé en ce que** la teneur en hydroxyuréthanes C dans la somme des masses de produits de condensation AB et de résines de mélange C se situe entre 5 et 40%.

8. Liant aqueux selon la revendication 1 **caractérisé en ce que** la teneur en poids des durcisseurs D dans la somme des masses de produits de condensation AB, de résines de mélange C et de durcisseurs D se situe entre 2 et 20%.

9. Utilisation de liants aqueux selon la revendication 1 pour la fabrication de laques de charge pour l'automobile, pour laquelle au préalable les produits de condensation AB sont mélangés aux hydroxyuréthanes C et sont neutralisés, puis le mélange est dispersé dans l'eau, une partie de cette dispersion est mélangée intimement à des pigments et des charges ainsi le cas échéant qu'à d'autres additifs, puis est ajoutée au reste de la dispersion et aux durcisseurs D ainsi le cas échéant qu'à de l'eau.

10. laques de charge pour l'automobile contenant un liant aqueux selon la revendication 1.
